(19) Europäisches Patentamt
European Patent Office
Office européen des brevets

(11) EP 1 998 328 A1

(12) EUROPEAN PATENT APPLICATION

(43) Date of publication:
03.12.2008 Bulletin 2008/49

(51) Int Cl.:
*G11B 7/249* (2006.01) *G11B 7/246* (2006.01)

(21) Application number: 07290675.3

(22) Date of filing: 30.05.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(71) Applicant: Clariant International Ltd.
4132 Muttenz (CH)

(72) Inventors:
- Klein, Cedric
  67170 Brumath (FR)
- Graciet, Jean-Christophe
  68128 Village-Neuf (FR)
- Lücke, Lars
  65719 Hofheim am Taunus (DE)
- Winter, Martin Alexander
  79400 Kandern (DE)

(54) **Use of indolinium diazamethine cations for optical data recording**

(57) The invention relates to the use of salts of indolinium diazamethine type cations with anionic azo metal complex dyes based on pyridinones in optical layers for optical data recording, preferably for optical data recording using a laser with a wavelength up to 450 nm.

The invention further relates to a write once read many (WORM) type optical data recording medium capable of recording and reproducing information with radiation of blue laser, which employs salts of indolinium diazamethine type cations with anionic azo metal complex dyes based on pyridinones in the optical layer.

EP 1 998 328 A1

## Description

The invention relates to the use of salts of indolinium diazamethine type cations with anionic azo metal complex dyes based on pyridinones in optical layers for optical data recording, preferably for optical data recording using a laser with a wavelength up to 450 nm.

The invention further relates to a write once read many (WORM) type optical data recording medium capable of recording and reproducing information with radiation of blue laser, which employs salts of indolinium diazamethine type cations with anionic azo metal complex dyes based on pyridinones in the optical layer.

Recently, organic dyes have attracted considerable attentions in the field of diode-laser optical data storage. WORM type optical data recording media like commercial recordable compact discs (CD-R) and recordable digital versatile discs (DVD-R) can contain in the recording layer dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, enhancement of photosensitivity, low thermal conductivity as well as light and thermal stabilities, durability for storage or non-toxicity. Important criteria are also good read-out stability, which means high number of cycles at a given intensity of laser-light, and sufficient solubilities of the dyes in the organic solvents generally applied in the spin coating process.

At the recorded region of such an organic dye type optical data recording medium, the optical properties have been changed not only by a change in the optical characteristics and a decrease in the layer thickness resulting from the thermal decomposition of the dye, but also by a deformation of the substrate.

This recording principle is the same for CD-R and DVD-R, the difference remaining the spot size and the wavelength of the laser light used. CD-R are writable at a wavelength of from 770 to 830 nm and DVD-R, by using more recent compact high-performance red diode lasers, at a wavelength from 600 to 700 nm achieving then a 6- to 8 fold improvement in data packing density in comparison with conventional CDs.

However, considering factors such as the recent spread of electronic networks (e.g. Internet) and the emergence of high definition television (HDTV) broadcasting, inexpensive and convenient recording media, capable of recording image information at even larger capacity, are required. While DVD-R's sufficiently serve as high-capacity recording media at present, demand for larger capacity and higher density has increased.

Blu-ray® discs (Blu-ray® disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) or HD-DVD discs (a standard developed by Toshiba and NEC) are going to be the next milestone in optical data recording technology. By these new specifications the data storage may be increased up to 27 Gigabytes per recording layer for a 12 cm diameter disc. By adopting a blue diode laser with a wavelength of 405 nm (GaN or SHG laser diodes), the pit size and track interval can be further reduced, again increasing the storage capacity by an order of magnitude.

The construction of such optical data recording media is known in the art. The optical recording medium comprises preferably a substrate with a guide groove for laser beam tracking, a recording layer, this recording layer also being called optical layer or dye layer in the following text, containing an organic dye as the main component, a reflective layer and a protective layer. When recording/readout is carried out through the substrate, a transparent substrate is employed. As such a transparent substrate, one made of a resin such as polycarbonate, polymethacrylate or amorphous polyolefin, one made of glass or one having a resin layer made of radiation curable resin, i.e. photopolymerizable resin, formed on glass, may, for example, be employed. Advanced optical data recording media may comprise further layers, such as protective layers, adhesive layers or even additional optical recording layers.

For blue diode-laser optical data storage a variety of dye compounds has been proposed in the literature.

WO 2006/106110 A discloses anionic azo metal complex dyes with commercially available cationic C.I. Basic Yellow Dyes as counterion (C.I. stands for Color Index: colour index international, fourth edition, © Society of Dyers and Colourists and American Association of Textile Chemists and Colorists 2002).

Unfortunately the dye compounds described so far still show disadvantages which impede their satisfactory use as dyes for optical data storage.

There is a still a need for an optical data recording medium that is capable of recording data at high density with improved recording characteristics and with improved read-out stabilities, also for the recording at speeds exceeding 1X, i.e. for 2X speed and 4X speed recording, therefore a need for an optical data recording medium with improved recording characteristics.

Surprisingly the object was achieved by using salts of indolinium diazamethine type cations with anionic azo metal complex dyes based on pyridinones.

In the following text, "halogen" represents F, Cl, Br or I, preferably F, Cl or Br, more preferably F or Cl, even more preferably Cl, if not otherwise stated; "halide" represents F-, Cl-, Br- or I-, preferably Cl- or I-, if not otherwise stated; "alkyl" represents linear and branched alkyl; and "alkoxy" represents linear and branched alkoxy; any alkyl and cycloalkyl groups being unsubstituted, partially or completely substituted by halogen; if not otherwise stated.

Subject of the invention is the use of a compound of formula (I),

An- * Cat+ (I)

Cat+ being a compound of formula (II);

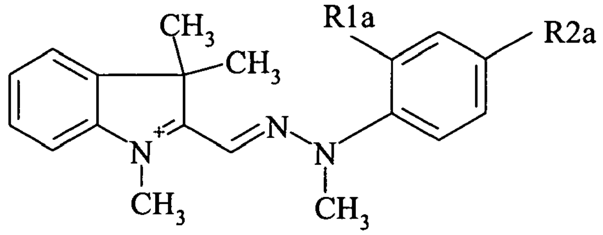

(II)

An- being a compound of formula (III);

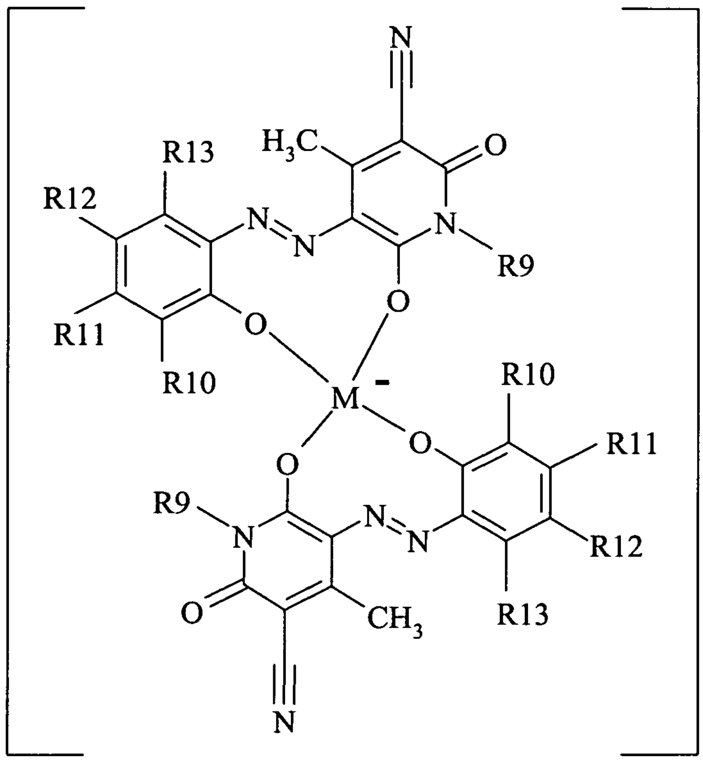

(III)

M represents a trivalent metal atom, preferably selected from groups 3, 4 5, 6, 7, 8, 9, 10, 11 and 12 of the Periodic Table of the Chemical Elements;

R9 is $C_{1-4}$ alkyl or -NH-phenyl;

R1a is selected from the group consisting of H, O-$C_{1-4}$ alkyl, O-phenyl and S-phenyl;

R2a is selected from the group consisting of H, n-propyl, isopropyl, O-$C_{1-4}$ alkyl, O-phenyl and S-phenyl;

with the proviso, that in the case that R2a is methoxy or H, then R1a is not H;

R10, R11, R12 and R13 other selected from the $SO_2$-$NR^{21}R^{22}$, CO-$R^{20}$, are identical or different and independently from each group consisting of H, CN, $CF_3$, halogen, $NO_2$, OH, SH, $SO_2R^{20}$, CO-$NR^{21}R^{22}$,
$C_{1-10}$ alkyl, $C_{3-10}$ cycloalkyl, the $C_{1-10}$ alkyl and the $C_{3-10}$ cycloalkyl being independently from each other unsubstituted or substituted by 1 to 4 identical or different substituents, the substituents being independently from each other selected from the group consisting of $C_{1-10}$ alkyl, halogen, OH, CN, $CF_3$, $C_{6-12}$ aryl and $NR^{21}R^{22}$,
$C_6$-$C_{12}$ aryl, O-$C_{6-12}$ aryl, S-$C_{6-12}$ aryl, the $C_{6-12}$ aryl and the O-$C_{6-12}$ aryl and the S-$C_{6-12}$ aryl being unsubstituted or substituted by 1 to 4 identical or different substituents, the substituents being independently from each other selected from the group consisting of $C_{1-10}$ alkyl, $C_{3-10}$ cycloalkyl, OH, $NO_2$, CN, halogen, $CF_3$, $C_{6-12}$ aryl, O-$C_{1-10}$ alkyl, S-$C_{1-10}$ alkyl and $NR^{21}R^{22}$,
O-$C_{1-10}$ alkyl, S-$C_{1-10}$ alkyl, O-$C_{3-10}$ cycloalkyl, S-$C_{3-10}$ cycloalkyl, $NHCOR^{20}$ and $NR^{21}R^{22}$;
the $R^{21}$ and $R^{22}$ residues are identical or different and independently from each other selected from the group consisting of H, $C_{1-10}$ alkyl, $C_{6-12}$ aryl and $C_{1-12}$ alkyl-$NR^{23}R^{24}$;
the $R^{23}$ and $R^{24}$ residues are identical or different and independently from each other selected from the group consisting of H, $C_{1-10}$ alkyl and $C_{6-12}$ aryl;
the $R^{20}$ residues are identical or different and independently from each other selected from the group consisting of OH, $C_{1-6}$ alkyl, $C_{6-10}$ aryl and O-$C_{1-6}$ alkyl;
in an optical layer, preferably in an optical layer for optical data recording, more preferably as a dye in an optical layer for optical data recording; further subject of the invention is a compound of formula (I).

Preferably,

M is selected from the group consisting of Co, Cr, Fe and Al;
R9 is $C_{1-4}$ alkyl;
R1a is selected from the group consisting of H, methoxy, O-phenyl and S-phenyl;
R2a is selected from the group consisting of H, isopropyl, methoxy, O-phenyl and S-phenyl;

with the proviso, that in the case that R2a is methoxy or H, then R1a is not H;

R12 is $NO_2$;
R11 is H or $NO_2$;
R10 is H or $NHCOCH_3$;
R13 is H.

More preferably,

M is selected from the group consisting of Co, Fe and Al, preferably Co;
R9 is n-butyl;
R1a is selected from the group consisting of H, methoxy, O-phenyl and S-phenyl;
R2a is selected from the group consisting of H, isopropyl and methoxy;

with the proviso, that in the case that R2a is methoxy or H, then R1a is not H;

R12 is $NO_2$;

R10 is H or $NHCOCH_3$;

R11 and R13 are H.

Especially,
Cat+ is selected from the group of compounds of formulae (1), (2), (3), (4) and (5);

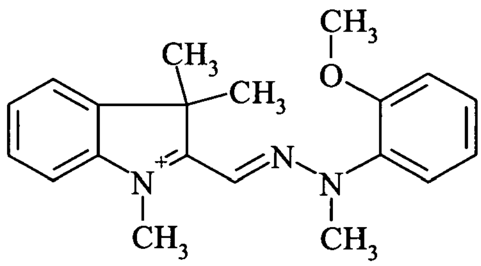

(1)

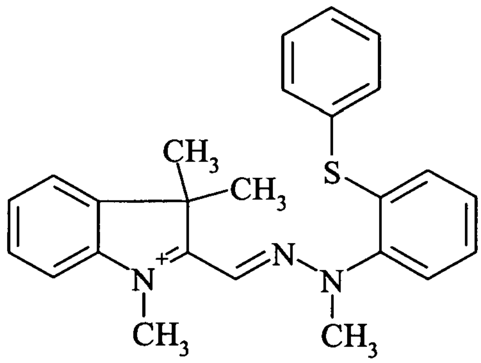

(2)

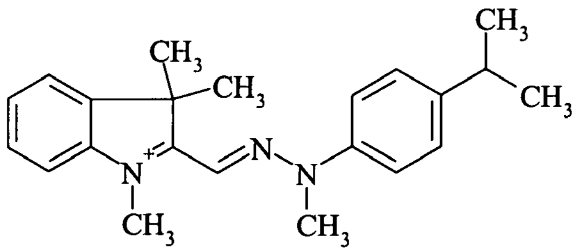

(3)

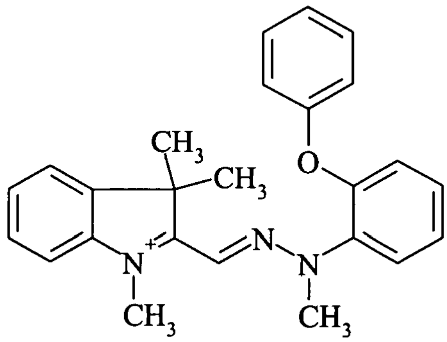

(4)

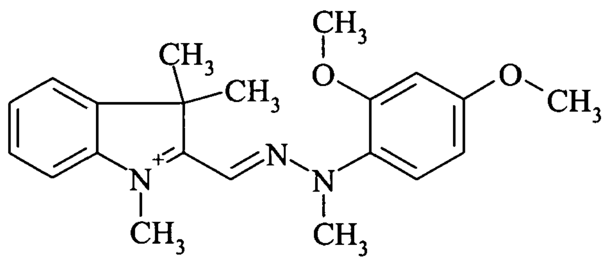

(5)

and
An- is a compound of formula (10) or a compound of formula (11).

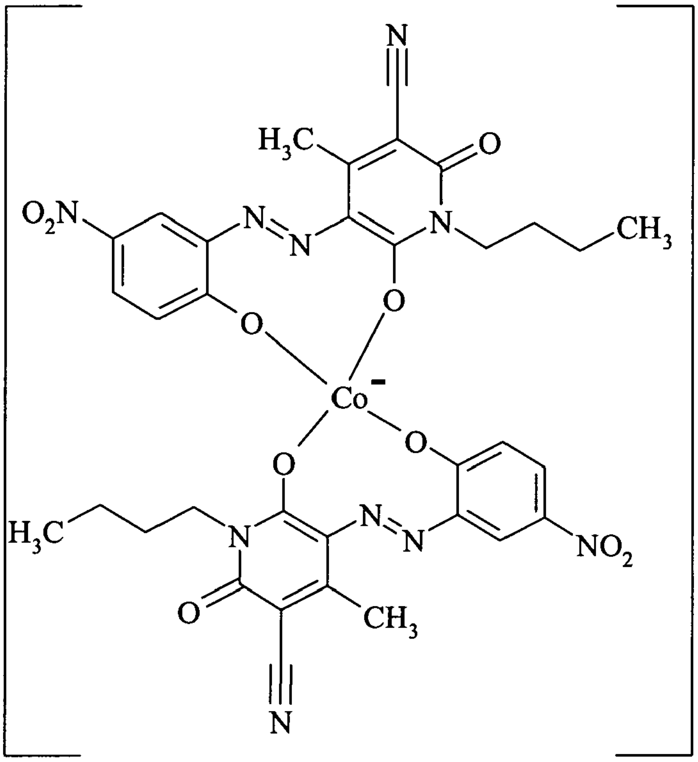

(10)

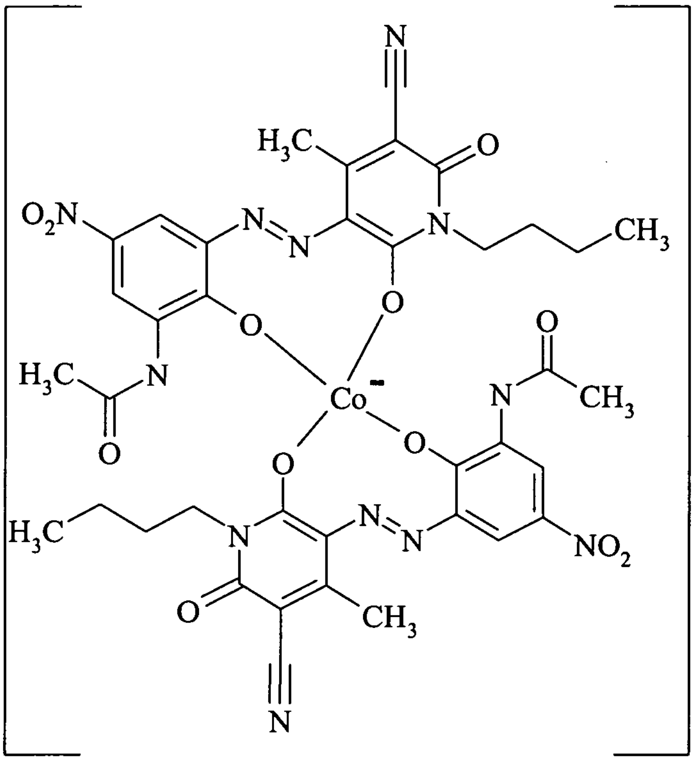

(11)

More especially, the compounds of formula (I) are selected from the group consisting of compounds of formulae (10_1), (10_2), (10_3), (10_4), (10_5), (11_1) and (11_2); even more especially of formula (10_2); these formulae being

as defined in table (A).

| Table (A) | | |
|---|---|---|
| **Compounds of formula (I): compound of formula** | **An-: compound of formula** | **Cat+: compound of formula** |
| **(10_1)** | (10) | (1) |
| **(10_2)** | (10) | (2) |
| **(10_3)** | (10) | (3) |
| **(10_4)** | (10) | (4) |
| **(10_5)** | (10) | (5) |
| **(11_1)** | (11) | (1) |
| **(11_2)** | (11) | (2) |

Further subject of the invention is a compound selected from the group consisting of compounds of formulae (10_1), (10_2), (10_3), (10_4), (10_5), (11_1) and (11_2); preferably a compound of formula (10_2), further their use in an optical layer, preferably in an optical layer for optical data recording, more preferably as a dye in an optical layer for optical data recording.

**Preparation of the compounds of formula (I)**

A further subject of the invention is a process for the preparation of compounds of formula (I), as well as of compounds of formula (I) in all the preferred aspects of the formula (I) as described above, especially of the compounds of formulae (10_1), (10_2), (10_3), (10_4), (10_5), (11_1) or (11_2),
by metathesis reaction between the respective compounds of formula (III_6),

compound of formula (III) * compound of formula (6) (III_6)

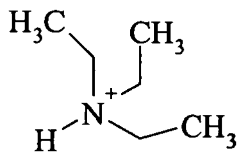

(6)

the compound of formula (III) also being in all the preferred aspects of the formula (III) as described above,
and the respective compounds of formula (II_salts);

compound of formula (II) * anion(II) (II_salts)

the compound of formula (II) also being in all the preferred aspects of the formula (II) as described above,
the anion(II) being selected from the group consisting of halides, sulfate and methylsulfate, preferably chloride, iodide, sulfate and methylsulfate, even more preferably chloride and iodide.

Metathesis reaction within the meaning of the invention signifies an exchange of ions between different salts.

The compounds of formula (III_6), especially the compounds of formula (III_6_R10acet), more especially the compound of formula (11_6) as defined in table (AA),

| compound of formula (III_R10acet) * compound of formula (6) | (III_6_R10acet) |
|---|---|

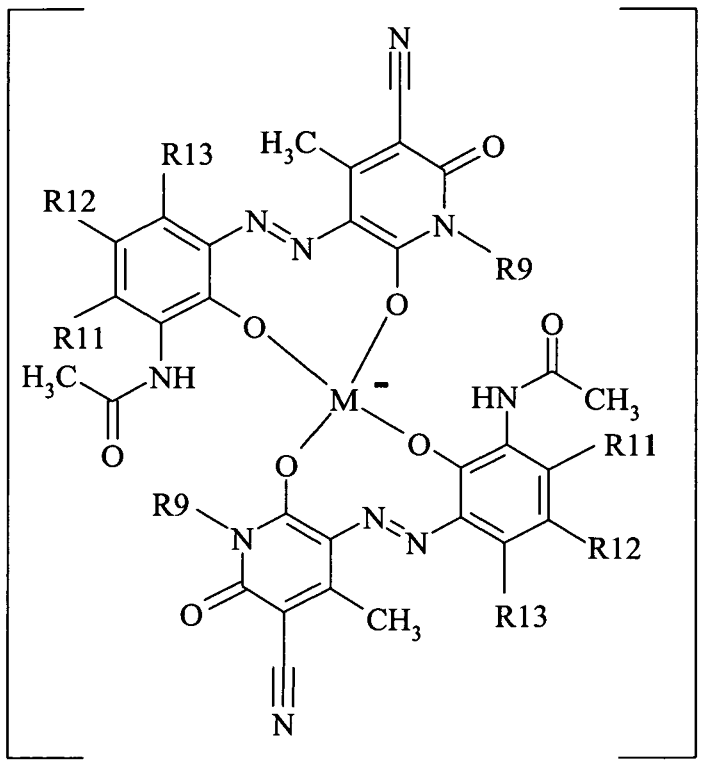

(III_R10acet)

are preferably prepared by a complexing reaction of a compound of formula (IV), especially of a compound of formula (IV_R10acet), the R9, R10, R11, R12 and R13 having the same meaning as described above, also with all their preferred embodiments,

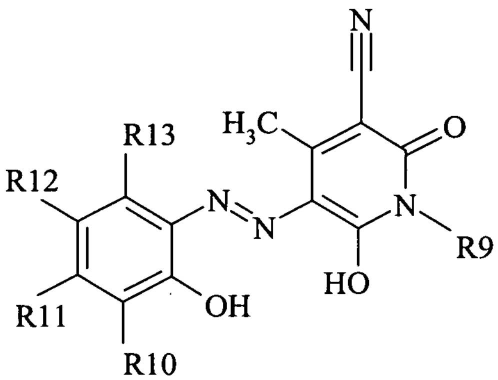

(IV)

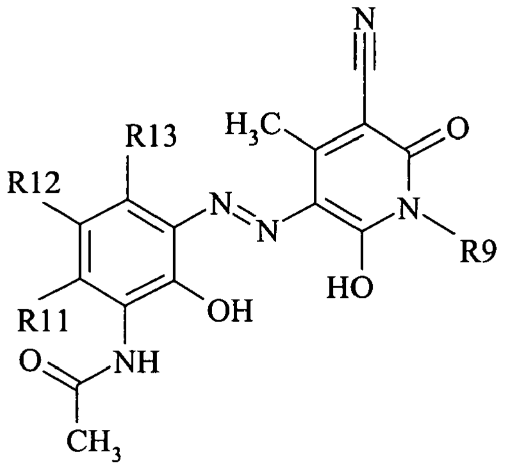

(IV_R10acet)

more especially of a compound of formula (IV_11),

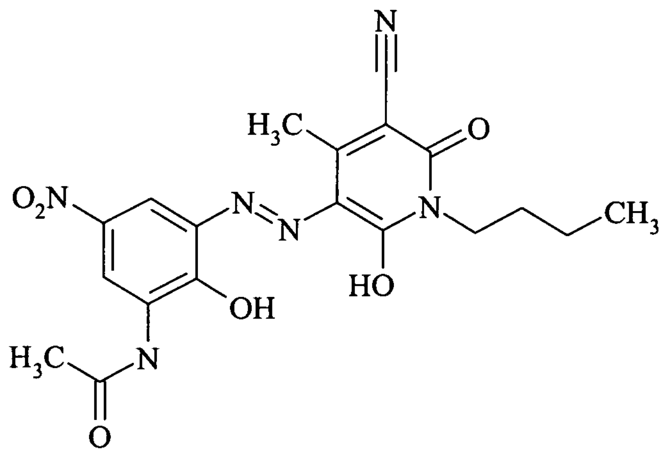

(IV_11)

with a metal salt; with the compound of formula (IV) preferably being prepared by an azo coupling reaction of the respective diazo components and the respective coupling agents.

The compound of formula (IV) is called azo ligand.

The complexing reaction is done using the required stoichiometric ratios between the compound of formula (IV) and the metal salt; each of the reactants may be used in excess with respect to the other reactant, preferably one equivalent of a metal salt and two equivalents of a compound of formula (IV) are used.

Preferably, the compounds of formula (III_6) are prepared by complexing reaction of a solution of one equivalent of a metal salt with a boiling solution of two equivalents of the compound of formula (IV).

In one preferred embodiment of the invention the metal of the metal salt is a trivalent metal. In another preferred embodiment of the invention the metal of the metal salt is a divalent metal, and in this case the complexing reaction is carried out under aerobic conditions in the presence of preferably of from 2.5 to 4, more preferably of from 2.9 to 3.2, especially of 3 equivalents of triethylamine for each equivalent of ligand. This ensures that the divalent metal atom is converted during the complexing reaction to a trivalent metal atom, and that the metal atom is incorporated into its four-fold coordination in the complex, resulting in an anionic charge on the final complex.

It is possible to use more than one metal salt, preferably a mixture of 2 or 3 metal salts, preferably in the required stoichiometric amounts with regard to the azo ligand.

The azo ligand can be added to the metal salt or vice versa.

In another preferred embodiment of the invention, $Cat^+$ as a compound of formula (II_salts) is already present during the complexing reaction.

The metathesis reaction is done preferably by mixing the respective compounds of formula (III_6) with the respective compounds of formula (II_salts).

The complexing reaction and the metathesis reaction can be carried out in suspension or in solution, preferably it is carried out in suspension.

The solvents that can be used in the complexing reaction or for the metathesis reaction are water, solvents and mixtures thereof. The solvents are preferably selected from the group consisting of $C_{1-8}$ alcohols, nitriles, preferably acetonitrile, acetone, aromatic solvents such as toluene or chlorobenzene, DMF, DMSO, NMP.

More preferred solvents are $C_{1-8}$ alcohols, especially ethanol and acetonitrile.

It is also possible to add the metal salt already at an earlier stage of the synthesis of the compounds of formula (I) or their precursors, preferably before, during or after an azo coupling reaction, which is preferably used to prepare the azo ligands, more preferably after the azo coupling reaction to the resulting suspension or solution of the ligands.

Especially preferably the azo ligands are isolated after synthesis, and the complexing reaction is carried out in a separate step.

Especially preferably the compounds of formula (III_6) are isolated after synthesis, and the metathesis reaction is carried out in a separate step.

Preferably the ligands are present as a suspension in the complexing reaction.

The complexing reaction and the metathesis reaction are generally done at temperatures between 20°C to 200°C, preferably at temperatures between 50°C to 170°C, particularly preferably at temperatures between 80°C to 150°C, further particularly preferably the complexing reaction and the metathesis reaction are carried out at reflux temperature under atmospheric pressure.

Preferably the compounds of formula (I) are isolated following standard methods, usually they form a precipitate, which is preferably isolated by filtration and dried.

Preferably the complexing reaction is done under aerobic conditions with a metal salt derived from a divalent metal, this divalent metal salt more preferably being a divalent cobalt salt, even more preferably being $CoSO_4*7H_2O$, in the presence of triethylamine.

When the compounds of formula (I) are prepared, especially when they are prepared by metathesis reaction, and also depending on the molar ratio between the compound of formula (III_6) and the compound of formula (II_salts), the cation of the compound of formula (III_6) may not be exchanged completely against the cation of the compound of formula (II_salts), resulting in a mixture of compounds comprising a compound of formula (III_6), a compound of formula (I) and possibly a compound of formula (II_salts).

Preferably, compounds of formulae (10_6) or (11_6), as specified in table (AA), were used for the metathesis reaction.

| Table (AA) | | |
|---|---|---|
| **Compounds of formula (III_6): Compound of formula** | **An-: compound of formula** | **Cat+: compound of formula** |
| **(10_6)** | (10) | (6) |
| **(11_6)** | (11) | (6) |

A further subject of the invention is a compound of formula (11_6) and the use of the compound of formula (11_6) for the preparation of compounds of formula (I).

**Preparation of Cat+**

Another subject of the invention is the preparation of the compounds of formula (II_salts), especially of the compounds of formulae (1_I), (2_I), (3_I), (4_I), (1_C1), (3_C1) and (5_C1) as defined in table (A1), by an alkylation reaction of a compound of formula (Vd), wherein R1a and R2a have the same meaning as described above, also with all their preferred embodiments, with methyl iodide or with dimethylsulfate.

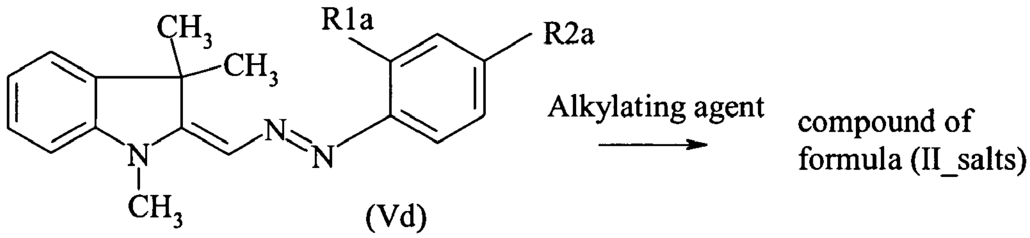

(Vd)

The alkylation reaction is carried out in non-aqueous solvents and in mixtures thereof. Non-aqueous solvents are preferably selected from the group consisting of aromatic solvents, alcohols, ketones or acetonitrile; more preferably from ketones or substituted benzenes, even more preferably ethylmethylketone or chlorobenzene is used.

Preferably after the alkylation reaction, especially in the case, that dimethylsulfate was used as alkylating agent, a sodium halide, preferably sodium chloride, is added. This added halide can substitute the iodide, the methylsulfate or the sulfate resulting from the alkylation reaction. Preferably in case, that the alkylation reaction is done with dimethylsulfate, sodium chloride is added after the alkylation reaction, and the sulfate is exchanged at least partially against chloride.

The alkylation reaction is preferably carried out with excess of alkylating agent, more preferably the molar ratio of alkylating agent to compound of formula (Vd) is of from 5 to 1.

The alkylation reaction is preferably done at a temperature of from 0°C to 200°C, more preferably of from 20°C to 100°C, even more preferably of from 30°C to 90°C.

The alkylation reaction time is preferably of from 10 min to 1 week.

Preferably the compound of formula (II_salt) is isolated following standard methods, in case of a precipitate preferably by filtration followed preferably by drying.

The compounds of formula (Vd) are preferably prepared by an azo coupling reaction of the respective compounds of formula (Va), also called coupling agent, with the respective compounds of formula (Vb), also called diazo component; the compounds of formula (Vb) being preferably prepared by diazotization reaction of the respective compounds of formula (Vc), also called amine compound;

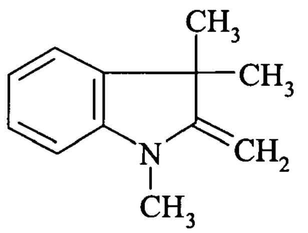

(Va)

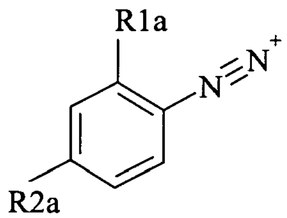

(Vb)

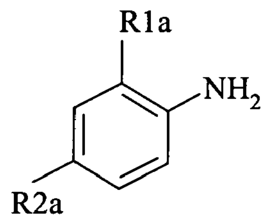

(Vc)

wherein R1a and R2a have the same meaning as described above, also with all their preferred embodiments.

The diazo component has preferably chloride Cl- as counter ion, since the diazotization reaction of the amine compound preferably is done in aqueous hydrochloride acid.

The amine compounds and the coupling agents are known substances and can be prepared according to or in analogy to known procedures.

The azo coupling reaction is carried out in water, non-aqueous solvents and in mixtures thereof. Non-aqueous solvents are preferably selected from the group consisting of alcohols, more preferably methanol, ethanol, propanol, butanol, pentanol, dipolar aprotic solvents, preferably dimethylformamide (DMF), DMSO, dimethylacetamide or N-methylpyrrolidinone (NMP) and pyridine, and water-immiscible solvents, preferably toluene or chlorobenzene. More preferably the azo coupling reaction is carried out in water, methanol or in mixture thereof.

The azo coupling reaction is preferably carried out with a stoichiometric ratio of coupling component and diazo component. The azo coupling reaction is generally done at a temperature of from -30°C to 100°C, preference being given to temperatures of - 10°C to 30°C, and particular preference to temperatures of -5°C to 20°C.

The azo coupling reaction may be carried out in an acidic as well as an alkaline medium. Preference is given to pH < 10, particular preference to pH 3 to 9.

Preferably the azo ligand is isolated following standard methods, in case of a precipitate preferably by filtration followed preferably by drying.

The alkylation reaction of the compound of formula (Vd) and a possible subsequent exchange of the anion results in compounds of formula (II_salts) and also in mixtures of compounds of formula (II_salts) which have an identical compound of formula (II) but a different anion(II).

Another subject of the invention are compounds of formula (II_salts), wherein the compound of formula (II) is preferably selected from the group of compounds of formulae (1), (2), (3), (4) and (5), and the anion(II) is preferably selected from the group consisting of halides, sulfate and methylsulfate, preferably chloride, iodide, sulfate and methylsulfate, even more preferably chloride and iodide; especially compounds of formula (1_I), (2_I), (3_I), (4_I), (1_Cl), (3_Cl) and (5_Cl), more especially compound of formula (2_I), as defined table (A1);

| table (A1) | | |
|---|---|---|
| **compounds of formula (II_salts)** | **compounds of formula (II)** | **anion(II)** |
| **compound of formula** | **compound of formula** | |
| **(1_I)** | (1) | I- |
| **(2_I)** | (2) | I- |
| **(3_I)** | (3) | I- |
| **(4_I)** | (4) | I- |
| **(1_Cl)** | (I) | Cl- |
| **(3_Cl)** | (3) | Cl- |
| **(5_Cl)** | (5) | Cl- |

and the use of the compounds of formula (II_salts), also with all their preferred embodiments as defined above, for the preparation of compounds of formula (I).

Another subject of the invention are compounds of formula (Vd), R1a and R2a haveing the same meaning as described above, also with all their preferred embodiments, especially compounds of formula (Vd_1), (Vd_2), (Vd_3), (Vd_4) or (Vd_5), more especially compound of formula (Vd_2);

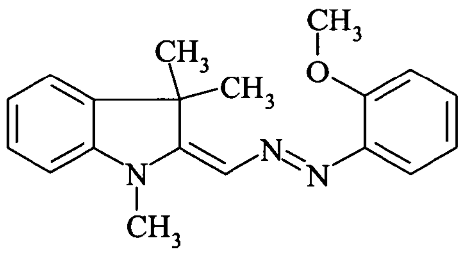

(Vd_1)

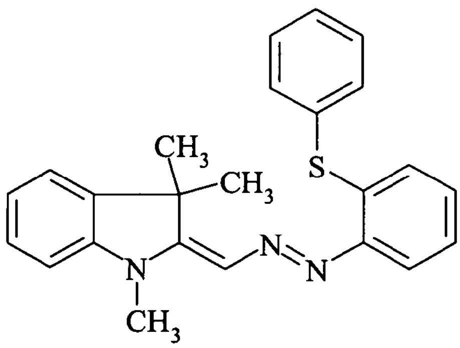

(Vd_2)

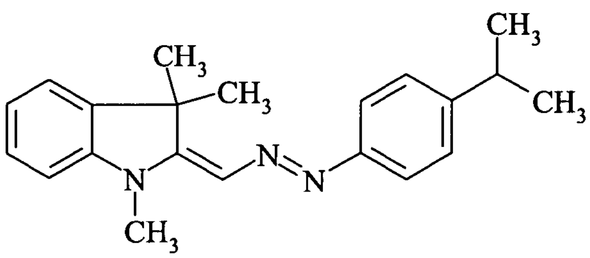

(Vd_3)

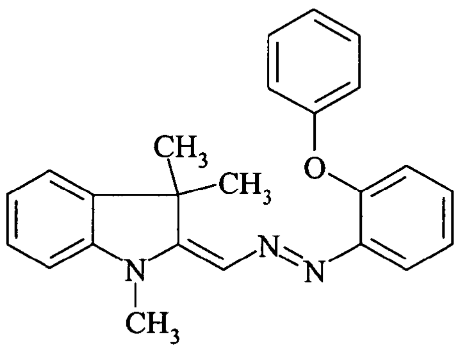

(Vd_4)

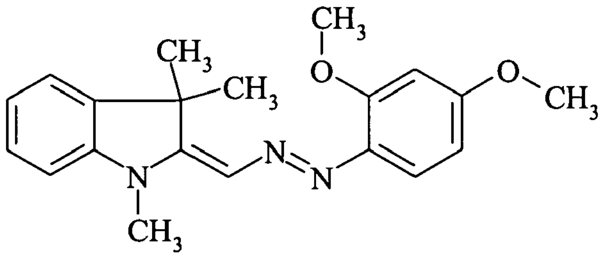

(Vd_5)

and the use of compounds of formula (Vd), also with all their preferred embodiments as defined above, for the preparation of compounds of formula (II_salts).

**Preparation of the compounds of formula (IV)**

The compounds of formula (IV) in the case that R10 is not $NHCOCH_3$ are known compounds and can be prepared according to or in analogy to known procedures, for example as described in WO 2006/106110 A or in the instant application.

The compounds of formula (IV) in the case that R10 is $NHCOCH_3$, especially the compounds of formula (IV_R10acet), more especially the compound of formula (IV_11), are preferably prepared by an azo coupling reaction of the respective compound of formula (IVa), also called coupling agent, with the respective compound of formula (IVb), also called diazo component; the compound of formula (IVb) being preferably prepared by diazotization reaction of the respective compound of formula (IVc), also called amine compound;

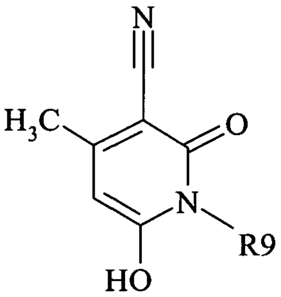

(IVa)

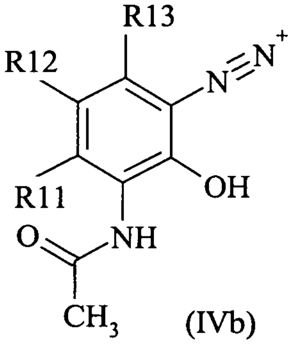

(IVb)

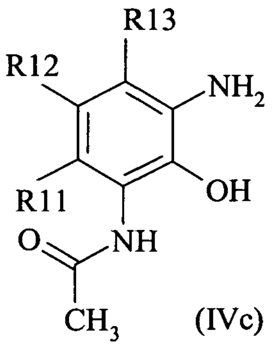

(IVc)

wherein R9, R11, R12 and R13 have the same meaning as described above, also with all their preferred embodiments; in the case of the preparation of the compound of formula (IV_11), R9 is n-butyl, R11 and R13 are H and R12 is nitro as shown in formulae (IVa_11), (IVb_11) and (IVc_11).

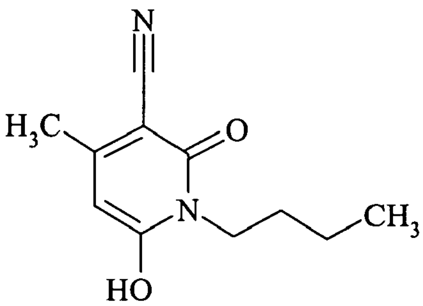

(IVa_11)

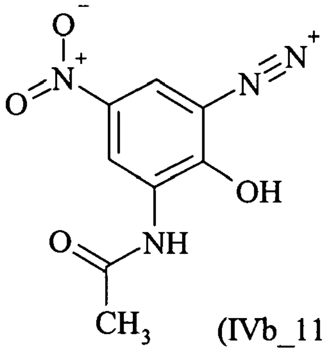

(IVb_11)

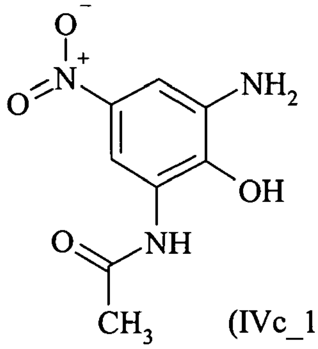

(IVc_11)

The diazo component has preferably chloride Cl- as counter ion, since the diazotization reaction of the amine compound preferably is done in aqueous hydrochloride acid.

The amine compounds and the coupling agents are known substances and can be prepared according to or in analogy to known procedures.

The azo coupling reaction is carried out in water, non-aqueous solvents and in mixtures thereof. Non-aqueous solvents are preferably selected from the group consisting of alcohols, more preferably methanol, ethanol, propanol, butanol, pentanol, dipolar aprotic solvents, preferably dimethylformamide (DMF), DMSO, dimethylacetamide or N-methylpyrrolidinone (NMP) and pyridine, and water-immiscible solvents, preferably toluene or chlorobenzene. More preferably the azo coupling reaction is carried out in water.

The azo coupling reaction is preferably carried out with a stoichiometric ratio of coupling component and diazo component. The azo coupling reaction is generally done at a temperature of from -30°C to 100°C, preference being given to temperatures of - 10°C to 30°C, and particular preference to temperatures of -5°C to 20°C.

The azo coupling reaction may be carried out in an acidic as well as an alkaline medium. Preference is given to pH < 10, particular preference to pH 3 to 9.

Preferably the azo ligand is isolated following standard methods, in case of a precipitate preferably by filtration followed preferably by drying.

A further subject of the invention is a compound of formula (IV_R10acet), especially a compound of formula (IV_11), and the use of a compound of formula (IV_R10acet), especially of a compound of formula (IV_11), as a ligand, preferably as a ligand in azo metal complex dyes.

A further subject of the invention is an optical layer comprising at least one compound of formula (I), with the compound of formula (I) also in all its described embodiments, particularly at least one compound of formula (10_1), (10_2), (10_3), (10_4), (10_5), (11_1), or (11_2); and the use of said optical layer for optical data recording media. An optical layer according to the invention may also comprise a mixture of two or more, preferably of two or three, more preferably of two compounds of formula (I). A further subject of the invention therefore is an optical data recording medium comprising an optical layer comprising at least one compound of formula (I).

Further, the invention relates to a method for producing an optical layer comprising the following steps

(a) providing a substrate,
(b) dissolving at least one compound of formula (I), particularly at least one compound of formula (10_1), (10_2), (10_3), (10_4), (10_5), (11_1) or (11_2), in an organic solvent to form a solution,
(c) coating the solution (b) on the substrate (a),
(d) evaporating the solvent to form an optical layer.

**(a) Substrate**

The substrate, which functions as support for the layers applied thereto, is advantageously semi-transparent (transmittance T>10%) or preferably transparent (transmittance T>90%). The support can have a thickness of from 0.01 to 10 mm, preferably from 0.1 to 5 mm.

Suitable substrates are, for example, glass, minerals, ceramics and thermosetting or thermoplastic plastics. Preferred supports are glass and homo- or co-polymeric plastics. Suitable plastics are, for example, thermoplastic polycarbonates, polyamides, polyesters, polyacrylates and polymethacrylates, polyurethanes, polyolefins, polyvinyl chloride, polyvinylidene fluoride, polyimides, thermosetting polyesters and epoxy resins. The most preferred substrates are polycarbonate (PC) or polymethylmethacrylate (PMMA).

The substrate can be in pure form or may also comprise customary additives, for example UV absorbers as light-stabilizers for the optical layer.

The substrate is advantageously transparent over at least a portion of the range from 350 to 500 nm, so that it is permeable to at least 90% of the incident light of the writing or readout wavelength.

**(b) Organic solvents**

Organic solvents are selected from $C_{1-8}$ alcohols, halogen substituted $C_{1-8}$ alcohols, $C_{1-8}$ ketones, $C_{1-8}$ ethers, halogen substituted $C_{1-4}$ alkanes, nitriles, preferably acetonitrile, or amides, or mixtures thereof.

Preferred $C_{1-8}$ alcohols or halogen substituted $C_{1-8}$ alcohols are for example methanol, ethanol, isopropanol, diacetone alcohol (DAA), 2,2,3,3-tetrafluoropropan-1-ol, trichloroethanol, 2-chloroethanol, octafluoropentanol or hexafluorobutanol, more preferred 2,2,3,3-tetrafluoropropan-1-ol.

Preferred $C_{1-8}$ ketones are for example acetone, methylisobutylketone, methylethylketone, or 3-hydroxy-3-methyl-2-butanone.

Preferred halogen substituted $C_{1-4}$ alkanes are for example chloroform, dichloromethane or 1-chlorobutane.

Preferred amides are for example DMF, dimethylacetamide or NMP.

**(c) Coating methods**

Suitable coating methods are, for example, immersion, pouring, brush-coating, blade-application and spin-coating, as well as vapor-deposition methods carried out under a high vacuum. When pouring methods are used, solutions in organic solvents are generally used. When solvents are employed, care should be taken that the supports used are insensitive to those solvents. The optical layer is preferably applied by spin-coating with a dye solution.

**(d) Optical layer**

The optical layer is preferably arranged between the transparent substrate and the reflecting layer. The thickness of the recording layer is from 10 to 1000 nm, preferably from 30 to 300 nm, more preferably from 70 to 250 nm, especially about 80 nm, for example from 60 to 120 nm.
The optical layer comprises a compound of formula (I) preferably in an amount sufficient to have a substantial influence on the refractive index, for example at least 30% by weight of the total weight of the optical layer, more preferably at least 60% by weight, most preferably at least 80% by weight.
Further customary components are stabilizers, for example $^{1}0_{2}$-, triplet- or luminescence quenchers, melting-point reducers, decomposition accelerators or any other additives that have already been described in optical data recording media. Preferably, stabilizers or fluorescence-quenchers are added if desired.
Stabilizers, $^{1}0_{2}$-, triplet- or luminescence-quenchers are, for example, metal complexes of N- or S-containing enolates, phenolates, bisphenolates, thiolates or bisthiolates, hindered phenols and derivatives thereof such as o-hydroxyphenyl-triazoles or -triazines or other UV absorbers, such as hindered amines (TEMPO or HALS, as well as nitroxides or NOR-HALS), and also as cations diimmonium, Paraquat™ or Orthoquat salts, such as ®Kayasorb IRG 022, ®Kayasorb IRG 040, optionally also as radical ions, such as N,N,N',N'-tetrakis(4-dibutylaminophenyl)-p-phenylene amine-ammonium hexafluorophosphate, hexafluoroantimonate or perchlorate. The latter are available from Organica (Wolfen/DE); ®Kayasorb brands are available from Nippon Kayaku Co. Ltd.
In a preferred aspect, the present invention provides for an optical layer suitable for high-density recording material, e.g. of the WORM disc format, in a laser wavelength range of from 350-450nm, preferably around 405 nm.

**Preparation of the optical data recording medium**

A method for producing an optical data recording medium comprising an optical layer according to the invention usually comprises the following additional steps

(e) applying a metal layer, also called reflective layer, onto the optical layer,
(f) applying a second polymer based layer to complete the disk, also called cover layer or protective layer.

**(e) Reflective layer**

The application of the metallic reflective layer is preferably effected by sputtering, vapor-deposition in vacuum or by chemical vapor deposition (CVD). The sputtering technique is especially preferred for the application of the metallic reflective layer.
Reflecting materials suitable for the reflective layer include especially metals, which provide good reflection of the laser radiation, used for recording and playback, for example the metals of Main Groups III, IV and V and of the Sub-groups of the Periodic Table of the Elements. Al, In, Sn, Pb, Sb, Bi, Cu, Ag, Au, Zn, Cd, Hg, Sc, Y, La, Ti, Zr, Hf, V, Nb, Ta, Cr, Mo, W, Fe, Co, Ni, Ru, Rh, Pd, Os, Ir, Pt, Ce, Pr, Nd, Pm, Sm, Eu, Gd, Tb, Dy, Ho, Er, Tm, Yb and Lu and alloys thereof are especially suitable. Special preference is given to a reflective layer of aluminum, silver, copper, gold or an alloy thereof, on account of their high reflectivity and ease of production.

**(f) Cover layer**

Materials suitable for the cover layer include plastics, which are applied in a thin layer to the support or the uppermost layer either directly or with the aid of adhesive layers. The material of the cover layer may for example be the same as the material of the substrate. It is advantageous to select mechanically and thermally stable plastics having good surface properties, which may be modified further.
The plastics may be thermosetting plastics and thermoplastic plastics. Preference is given to radiation-cured (e.g. using UV radiation) protective layers, which are particularly simple and economical to produce. A wide variety of

radiation-curable materials are known. Examples of radiation-curable monomers and oligomers are acrylates and methacrylates of diols, triols and tetrols, polyimides of aromatic tetracarboxylic acids and aromatic diamines having $C_1$-$C_4$alkyl groups in at least two ortho-positions of the amino groups, and oligomers with dialkylmaleinimidyl groups, e.g. dimethyl maleinimidyl groups.

A high-density optical data recording medium according to the invention therefore preferably is a recordable optical disc comprising: a first substrate, which is a transparent substrate with grooves, a optical layer (recording layer), which is formed on the first substrate surface using the compound of formula (I), a reflective layer formed on the optical layer, a second substrate, which is a transparent substrate connected to the reflective layer with an attachment layer.

The optical data recording medium according to the invention is preferably a recordable optical disc of the WORM type. It may be used, for example, as a playable HD-DVD (high density digital versatile disc) or Blu-ray® disc, as storage medium for a computer or as an identification and security card or for the production of diffractive optical elements, for example holograms.

The optical data recording media according to the invention may also have additional layers, for example interference layers. It is also possible to construct optical data recording media having a plurality of (for example two) recording layers. The structure and the use of such materials are known to the person skilled in the art. Preferred, if present, are interference layers that are arranged between the recording layer and the reflecting layer and/or between the recording layer and the substrate and consist of a dielectric material of $TiO_2$, $Si_3N_4$, ZnS or silicone resins.

These optical data recording media according to the invention can be produced by processes known in the art.

**Readout methods**

The structure of the optical data recording medium according to the invention is governed primarily by the readout method; known function principles include the measurement of the change in the transmission or, preferably, in the reflection, but it is also known to measure, for example, the fluorescence instead of the transmission or reflection.

When the optical data recording medium is structured for a change in reflection, the following structures can be used: transparent support / recording layer (optionally multilayered) / reflective layer and, if expedient, protective layer (not necessarily transparent); or support (not necessarily transparent) / reflective layer / recording layer and, if expedient, transparent protective layer. In the first case, the light is incident from the support side, whereas in the latter case the radiation is incident from the recording layer side or, where applicable, from the protective layer side. In both cases the light detector is located on the same side as the light source. The first-mentioned structure of the recording material to be used according to the invention is generally preferred.

When the optical data recording medium is structured for a change in light transmission, the following different structure comes into consideration: transparent support/ recording layer (optionally multilayered) and, if expedient, transparent protective layer. The light for recording and for readout can be incident either from the support side or from the recording layer side or, where applicable, from the protective layer side, the light detector in this case always being located on the opposite side.

Suitable lasers are those having a wavelength of 330-500 nm, for example commercially available lasers having a wavelength of 405 to 414 nm, especially semi-conductor lasers. The recording is done, for example, point for point, by modulating the laser in accordance with the mark lengths and focusing its radiation onto the recording layer. It is known from the specialist literature that other methods are currently being developed which may also be suitable for use.

The process according to the invention allows the storage of information with great reliability and stability, distinguished by very good mechanical and thermal stability and by high light stability and by sharp boundary zones of the pits. Special advantages include the high contrast, the low jitter and the surprisingly high signal/noise ratio, so that excellent readout is achieved.

The readout of information is carried out according to methods known in the art by registering the change in absorption or reflection using laser radiation.

The invention accordingly relates also to a method for the optical data recording, storage and playback of information, wherein an optical data recording medium according to the invention is used. The recording and the playback advantageously take place in a wavelength range of from 330 to 500 nm.

The compounds of formula (I) provide for particularly preferable properties when used in optical layers for optical data recording media according to the invention. They possess the required optical characteristics, demonstrated when used in the form of a solid film:

- an advantageously homogeneous, amorphous and low-scattering optical layer,
- a high refractive index at the longer wavelength flank of the absorption band, which preferably achieves n values of the refractive index of from 1.0 to 3.0 in the range of from 330 to 500 nm,
- a high sensitivity under laser radiation of high power density and good playback characteristics in the desired spectral range,

- an enhanced photosensitivity and stability (in daylight and under laser radiation of low power density) compared to dyes already known in the art,
- an uniform script width and a high contrast,
- an absorption maximum (λ max) in the preferred range between 330 nm and 500 nm as being preferred for blue laser applications, more precisely from 400 to 500 nm,
- a decomposition point (DP) in the preferred temperature range between 180°C and 300°C, more precisely 250°C to 300°C
- a sufficient heat release (HR)

Recording performance of a compound is related to specific parameters measured on disc like:

- a low simulated bit error rate (SbER)
- a low inner parity error rate (PI error)
- a high reflectivity (R)
- a low laser recording power (Pw: power, or OPC: optimum power control): the lower the better
- good readout stability at different laser reading powers
- an appropriate partial response signal to noise ratio (PRSNR): the higher the better

The absorption edge is surprisingly steep even in the solid phase.

The compounds of formula (I) also show a narrow decomposition temperature of 180 to 350°C, fitting with the thermal requirements. Additionally, these compounds show a high solubility in organic solvents, which is ideal for the spin-coating process to manufacture optical layers.

As a result of the use of the dyes of the invention, the recording media of the invention advantageously have homogeneous, amorphous and low scattering recording layers. Further advantages is the light stability in day light and under laser radiation of 0.4 mW, combined with a high sensitivity under laser radiation of moderate, this means as low as possible, power density (OPC preferably less than 8.0 mW for 1X speed and preferably less than 11 mW for 2X speed), the good thermal and storage stability. Especially in case of recording at higher speed, the OPC required should be as low as possible.

## Examples

UV-vis

For UV-vis spectra, λ max and ε values of a compound are determined by using an UV-vis spectrophotometer, the compound was dissolved in $CH_2Cl_2$, DMSO or in tfp. The values are obtained by balancing the measurements performed on compound solutions at three different concentrations.

Melting point (MP)

For the determination of melting point, the compound or the composition is incorporated in a glass capillary. The capillary was heated using the following profile: temperature range from 20 to 350 °C, heating rate 2 °C/min.

Thermal Decomposition: Decomposition point (DP) and heat release (HR)

For the determination of DP and HR, the compound is incorporated into a sealed aluminum pan. Analysis conditions are as following: Temperature range from 25 to 400°C, heating rate 10°C/min, nitrogen flow of 50 ml/min. Values are determined by single measurement. Additionally, thermal decomposition is also being observed while measuring the melting point.

Partial response signal to noise ratio (PRSNR)

A definition and the measuring techniques of PRSNR are described in a book available from DVD Format Logo Licensing Co., Ltd. for example, Annex H of Version 0.9, PART 1 Physical Specifications, DVD Specifications for High Density Read-Only Disk. The higher the PRSNR the better.

Simulated bit error rate (SbER)

A definition and the measuring techniques of SbER are described in a book available from DVD Format Logo

Licensing Co., Ltd. for example, Annex H of Version 0.9, PART 1 Physical Specifications, DVD Specifications for High Density Read-Only Disk. The lower the SbER the better.

PRSNR and SbER are measured in a state in which information has been recorded in the adjacent tracks.

Reflectivity (R)

A definition and the measuring techniques for the light reflectivity (R) is described in a book available from DVD Format Logo Licensing Co., Ltd. for example, Annex D of Version 0.9, PART 1 Physical Specifications, DVD Specifications for High Density Read-Only Disk. The higher the R the better.

Cycle number

**[0115]** The degree of degradation of various parameters, e.g. of the PRSNR and SbER, due to repetitive read out is measured. The higher the cycle number until reaching the minimum specifications or a comparable performance the better.

"Ex." means example, "Comp. Ex." means comparative example.

**Example 1**

**Diazotization reaction and azo coupling reaction**

32.2 g of conc. aqueous HCl were added dropwise to a solution composed of 12.4 g of 2-methoxyaniline in 100 ml of water. Temperature was decreased to 0°C with an ice bath and 20.8 ml of a solution of aqueous sodium nitrite (33.3% by weight) were added dropwise while temperature was maintained below 5°C. The resulting solution was stirred at 0°C for 1hour and added dropwise to a mixture composed of 17.6 g of 1,3,3-trimethyl-2-methyl-indoline, 31.8 g of $Na_2CO_3$, 100 ml of methanol and 30 ml of water at 10°C.
After complete addition, the resulting mixture was stirred for 1hour at 10°C. Concentrated aqueous HCl was then added until pH = 7. The resulting precipitate was filtered, washed with 1000 ml of water and air dried to yield 28.3 g of a yellow intermediate, i.e. compound of formula (Vd_1).

**Alkylation method A**

The 28.3 g of the obtained compound of formula (Vd_1) was taken up in 200 ml of methylethylketone, 47 g of methyliodide were added and the resulting mixture was refluxed under atmospheric pressure for 48 hours. Temperature was cooled to room temperature and the formed precipitate was filtered, washed 3 times with each 15 ml of methylethylketone and dried under vacuum at 60°C for 24 hours. 22.4 g of compound of formula (1_I) were obtained as an orange solid.

**Example 2 to 7: Diazotization and coupling reaction**

The diazotization and coupling reaction according to example 1 was done using the respective aniline compound to yield via the intermediate compounds of formula (Vd_2), (Vd_3), (Vd_4) and (Vd_5) the compounds of formula (2_I), (3_I), (4_I), (1_Cl), (3_Cl) and (5_Cl).

**Example 2 to 4: Alkylation method A**

The alkylation reaction according to example 1 was done using the respective intermediates. In the case that the desired final compound did not precipitate, the reaction mixture was evaporated to dryness and the compound used without further purification, this was e.g. the case with example 4.

**Example 5: Alkylation method B**

The obtained solid from the diazotization and coupling reaction from example 5 was taken up in 120 ml of chlorobenzene and the mixture was heated to 80°C. 3.18 g of N-ethyldiisopropylamine were added dropwise followed by the addition of 14.9 g of dimethylsulfate. The resulting mixture was stirred at 85°C for 10 hours. Chlorobenzene was vapor distilled. To the obtained mixture were added 45 g of NaCl and the resulting mixture was evaporated to dryness. The resulting solid was dried under vacuum at 60°C for 24 hours. 71 g containing compound of formula (1_Cl) were obtained.

**Example 6 and 7: Alkylation method B**

The alkylation reaction according to example 5 was done using the respective intermediates resulting in the compounds of formula (3_C1) and (5_C1).

The combinations and details are given in table (A2) and (A3).

TABLE (A2)

| | Step 1: diazotation/azo coupling | | | |
|---|---|---|---|---|
| **Ex.** | **1,3,3-trimethyl- 2-methyl- indoline** | **Aniline compound** | | **Intermediate obtained** |
| | **[g]** | | **[g]** | **yield [g]** |
| **1** | 17.6 | 2-methoxyaniline | 12.4 | 28.3 |
| **2** | 44.4 | 2-aminophenyl-phenylsulfide | 51.8 | 87.2 |
| **3** | 12.7 | 4-isopropylaniline | 10.1 | 21.8 |
| **4** | 24.0 | 2-phenoxyaniline | 25.8 | 49.7 |
| **5** | 17.6 | 2-methoxyaniline | 12.4 | 28.3 |
| **6** | 8.9 | 4-isopropylaniline | 6.3 | 11.3 |
| **7** | 17.6 | 2,4-dimethoxyaniline | 15.8 | 29.1 |

TABLE (A3)

| | Step 2 : alkylation | | | | |
|---|---|---|---|---|---|
| **Ex.** | **Intermediate used** | **Alkylating agent** | | **Compound of formula** | |
| | **[g]** | | **[g]** | | **yield [g]** |
| **1** | 28.3 | Methyliodide | 47.0 | (1 I) | 22.4 |
| **2** | 20.2 | Methyliodide | 22.6 | (2 I) | 12.7 |
| **3** | 5.9 | Methyliodide | 8.0 | (3 I) | 8.0 |
| **4** | 25.0 | Methyliodide | 29.2 | (4 I) | 32.0 |
| **5** | 28.3 | Dimethylsulfate | 14.9 | (1 Cl) | 71.0 |
| **6** | 4.8 | Dimethylsulfate | 2.5 | (3 Cl) | 6.0 |
| **7** | 27.0 | Dimethylsulfate | 13.3 | (5 Cl) | 31.0 |

Table (A4) shows the phys-chem properties of the compounds of formulae (1_I) to (5_C1).

Table (A4)

| **Ex.** | **Compound of formula** | **$\lambda$ max [nm]** | **$\varepsilon$ (at $\lambda$ max) [L/g*cm]** | **MP/ DP [°C]** |
|---|---|---|---|---|
| **1** | (1_I) | 411 | 49 | 208(MP), 244 (DP) |
| **2** | (2_I) | 403 | 60 | 207 (MP), 247 (DP) |
| **3** | (3_I) | 445 | 72 | 262 (MP), 266 (DP) |
| **4** | (4_I) | 405 | 61 | 251 (DP) |
| **5** | (1_Cl) | ### | ### | ### |
| **6** | (3_Cl) | ### | ### | ### |
| **7** | (5_Cl) | ### | ### | ### |

**Example 8**

23.6 g of 2-amino-4-nitro-6-acetamidophenol were added to 190 ml of water followed by dropwise addition of 36 g of concentrated aqueous HCl. Temperature was cooled to 0°C and 25.5 ml of a solution of aqueous sodium nitrite (33.3 % by weight) was added dropwise, keeping the temperature below 5°C. The yellow mixture was stirred at this temperature for 1hour. The mixture was then transferred onto a mixture containing 23.1 g of compound of formula (IVa_ Butyl), 45.9 g of sodium acetate in 210 ml of water.

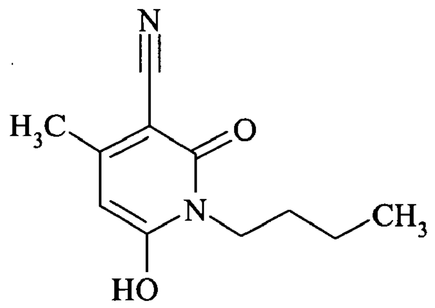

(IVa_butyl)

After complete addition, the resulting mixture was stirred for 1hour at room temperature. The resulting brownish yellow precipitate was filtered, washed with 800 ml of water and dried under vacuum at 60°C for 24 hours. 37.5 g of compound of formula (IV_11) were obtained as a yellow solid.

**Example 9**

22.9 g of compound of formula (IV_11), 15.0 g of CoSO4*7H2O and 1000 ml of acetonitrile were refluxed for 20 minutes under atmospheric pressure. 16.3 g of triethylamine were added dropwise and the resulting mixture was refluxed for 1h 30 min under atmospheric pressure. After being cooled to room temperature, the solution was filtered and the solvent was mostly removed by distillation. To the resulting purple slurry were added dropwise 160 ml of ethanol and the mixture was refluxed for 1 hour under atmospheric pressure. After being cooled to room temperature the greenish-brown precipitate was filtered, washed with 60 ml of ethanol and then with 180 ml of water and dried under vaccum at 60°C for 24 hours. 24.2 g of compound of formula (11_6) were obtained as a brown-black solid.
Table (A5) shows the phys-chem properties of the compounds of formula (IV_11) and (11_6).

**Table (A5)**

| Ex. | Compound of formula | λ max | ε (at λ max) | MP/ DP |
|---|---|---|---|---|
| | | [nm] | [L / g * cm] | [°C] |
| **8** | (IV_11) | ### | ### | ### |
| **9** | (11_6) | 485 | 46 | 314 (DP) |

**Example 10**

71.0 g of the solid containing compound of formula (1_Cl) prepared according to example 5 were stirred for 1 hour in 700 ml of ethanol. The obtained mixture was filtered. The filtrate was then added dropwise to a refluxing mixture under atmospheric pressure composed of 64.4 g of compound of formula (10_6) and 640 ml of ethanol. After complete addition, the mixture was refluxed under atmospheric pressure for 4h. After being cooled to room temperature, the precipitate was filtered, washed with 750 ml of ethanol and then with 5000 ml of water and dried under vaccum at 65°C for 24 hours. 72.0 g of compound of formula (10_1) were obtained as an orange-brown solid.

**Example 11 to 16**

The preparation according to example 10 was done using the respective precursors comprising the compounds of formula (1) to (5) the respective precursors comprising the compounds of formula (10) and (11).
The combinations and details are given in table (A6).

| Table (A6) | | | | | | |
|---|---|---|---|---|---|---|
| **Ex.** | **An-:** | | **Cat+:** | | **Compound of formula (I):** | |
| | **compound of formula** | **[g]** | **compound of formula** | **[g]** | **compound of formula** | **[g]** |
| **10** | (10_6) | 64.4 | (1_Cl) | 71.0 | (10_1) | 72.0 |
| **11** | (10_6) | 8.1 | (2_I) | 3.0 | (10_2) | 9.3 |
| **12** | (10_6) | 4.5 | (3_Cl) | 2.0 | (10_3) | 5.5 |
| **13** | (10_6) | 3.0 | (4_I) | 1.07 | (10_4) | 3.4 |
| **14** | (10_6) | 55.8 | (5_Cl) | 20.0 | (10_5) | 60.4 |
| **15** | (11_6) | 2.48 | (1_I) | 1.3 | (11_1) | 2.9 |
| **16** | (11_6) | ### | (2_I) | | (11_2) | ### |

Table (A7) shows the phys-chem properties of the compounds of formula (10_1), (10_2), (10_3), 10_4), (10_5), (11_1) and (11_2).

| Table (A7) | | | | |
|---|---|---|---|---|
| **Ex.** | **Compound of formula** | **λ max [nm]** | **ε (at λ max) [L / g*cm]** | **MP/ DP [°C]** |
| **10** | (10_1) | 482 | 51 | 282 (DP) |
| **11** | (10_2) | 482 | 54 | 285 (DP) |
| **12** | (10_3) | 476 | 74 | 275 (DP) |
| **13** | (10_4) | 484 | 52 | 289 (DP) |
| **14** | (10_5) | 481 | 56 | 294 (DP) |
| **15** | (11_1) | 485 | 51 | 287 (DP) |
| **16** | (11_2) | ### | ### | (DP) |

**Application Example 1**

The optical and thermal properties of the compounds of formula (I) were studied. The compounds of formula (I) show high absorption at the desired wavelengths. In addition, the shapes of the absorption spectra, that still remain critical to the disc reflectivity and formation of clean mark edges, are composed of one major band, comprised in a range of from 330 to 500 nm.

More precisely, n values of the refractive index were evaluated between 1.0 and 2.7. Light stabilities were found comparable to commercial dyes which are already stabilized with quenchers for the use in optical data recording.

Sharp threshold of thermal decomposition within the required temperature range characterizes the compounds of formula (I) which are desirable for the application in optical layers for optical data recording.

**Application Example 2 - Optical layer and optical data recording medium**

1.4% by weight, based on the weight of the solvent, of the compound of formula (10_1) are dissolved in 2,2,3,3-tetrafluoropropan-1-ol and the solution is filtered through a Teflon filter of pore size 0.2 μm and applied by spin-coating at 1000 rpm to the surface of a 0.6 mm thick, grooved polycarbonate disc of 120 mm diameter. The excess solution is spun off by increasing the rotational speed. On evaporation of the solvent, the dye remains behind in the form of a uniform, amorphous solid layer, the optical layer. After drying the optical layer in a circulating-air oven at 70°C (10 min) in a vacuum coating apparatus, a 100 μm thick silver layer is then applied to the recording layer by atomization. Then a 6 μm thick protective layer of a UV curable photopolymer (650-020, DSM) is applied thereto by means of spincoating. Finally, a second substrate is provided to combine with the resin protection layer using an attachment layer. This completes the manufacturing of a high-density recordable optical disc, the optical data recording medium.

Evaluation tests are performed using an optical disk evaluation device available from Pulse Tech Co., Ltd.

The testing conditions are the following ones:

- Numerical aperture (NA) of the optical head: 0.65
- Wavelength of a laser light for recording and reproduction: 405 nm
- Constant linear velocity (CLV): 6.61 m/sec.
- Track pitch: 400 nm
- Wobble amplitude of the groove track: 14 nm
- Groove depth: 90 nm.

**Comparative example 1**

Application example 2 was carried out using the compound of formula (d6BY28), prepared according to WO 2006/106110 A.

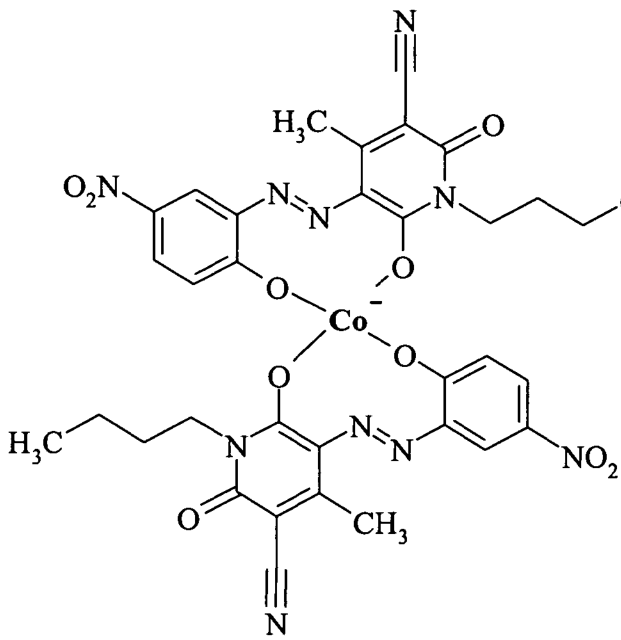

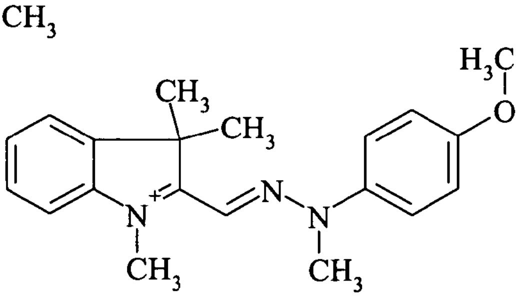

(d6BY28)

Results of the testing according to application example 2 with various compounds are summarized in the table (D).

**Table (D)**

| Appl. Ex. | Compound of formula | Pw | SbER | PRSNR | modulation | reflectivity |
|---|---|---|---|---|---|---|
| | | [mW] | | | | [%] |
| 2 | (10_1) | 7.1 | 3.2*10E-09 | 34.8 | 0.62 | 21.1 |
| 3 | (10_2) | 7.3 | 2.1*10E-09 | 37.0 | 0.62 | 18.2 |
| 4 | (10_5) | 7.3 | 8.8*10E-08 | 24.2 | 0.52 | 21.4 |
| 5 | (11_1) | 7.2 | 1.8*10E-11 | 38.6 | 0.65 | 17.9 |
| 6 | (11_2) | ### | ### | ### | ### | ### |
| | | | | | | |
| Comp. Ex. | | | | | | |
| 1 | (d6BY28) | 8 | 3.2*10E-06 | 22.3 | 0.49 | 19.4 |

A test for evaluating a degree of degradation due to repetition reproduction is conducted for each of the write-once optical disks made for the described recording layers. Readings are carried out at a reading laser power of 0.4 mW and the degrees of degradation of PRSNR and SbER are then measured. Maximum cycle number was found within the specifications.

## Claims

1. Use of a compound of formula (I),

An- * Cat+ (I)

Cat+ being a compound of formula (II);

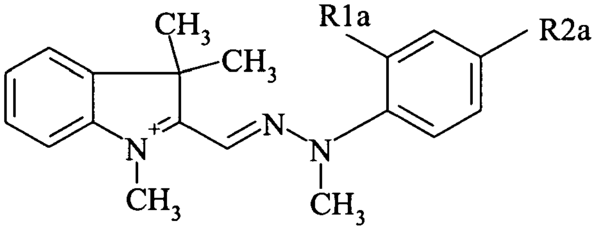

(II)

An- being a compound of formula (III);

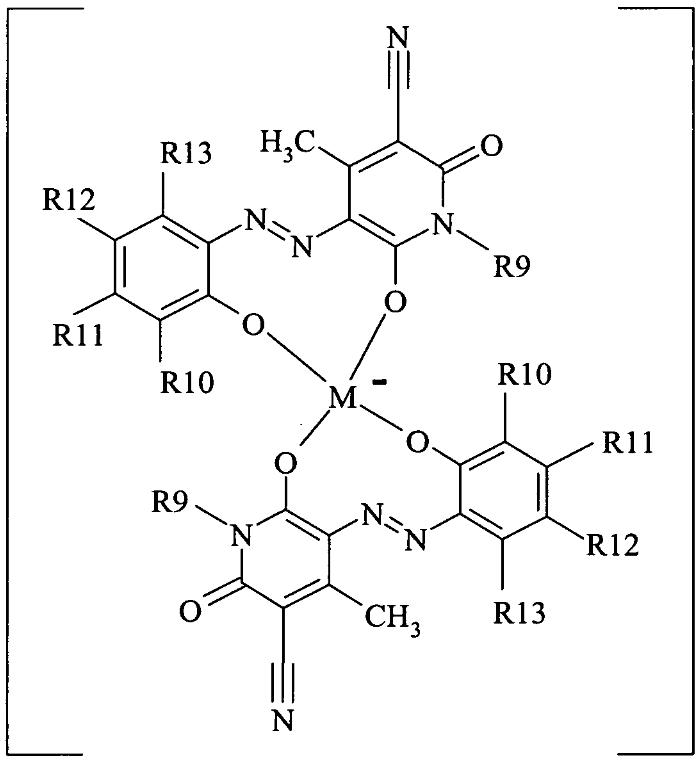

(III)

M represents a trivalent metal atom;
R9 is $C_{1-4}$ alkyl or -NH-phenyl;
R1a is selected from the group consisting of H, O-$C_{1-4}$ alkyl, O-phenyl and S-phenyl;

R2a is selected from the group consisting of H, n-propyl, isopropyl, O-$C_{1-4}$ alkyl, O-phenyl and S-phenyl;

with the proviso, that in the case that R2a is methoxy or H, then R1a is not H;
R10, R11, R12 and R13 are identical or different and independently from each other selected from the group consisting of H, CN, $CF_3$, halogen, $NO_2$, OH, SH, $SO_2$-$NR^{21}R^{22}$, CO-$R^{20}$, $SO_2R^{20}$, CO-$NR^{21}R^{22}$,
$C_{1-10}$ alkyl, $C_{3-10}$ cycloalkyl, the $C_{1-10}$ alkyl and the $C_{3-10}$ cycloalkyl being independently from each other unsubstituted or substituted by 1 to 4 identical or different substituents, the substituents being independently from each other selected from the group consisting of $C_{1-10}$ alkyl, halogen, OH, CN, $CF_3$, $C_{6-12}$ aryl and $NR^{21}R^{22}$,
$C_6$-$C_{12}$ aryl, O-$C_{6-12}$ aryl, S-$C_{6-12}$ aryl, the $C_{6-12}$ aryl and the O-$C_{6-12}$ aryl and the S-$C_{6-12}$ aryl being unsubstituted or substituted by 1 to 4 identical or different substituents, the substituents being independently from each other selected from the group consisting of $C_{1-10}$ alkyl, $C_{3-10}$ cycloalkyl, OH, $NO_2$, CN, halogen, $CF_3$, $C_{6-12}$ aryl, O-$C_{1-10}$ alkyl, S-$C_{1-10}$ alkyl and $NR^{21}R^{22}$,
O-$C_{1-10}$ alkyl, S-$C_{1-10}$ alkyl, O-$C_{3-10}$ cycloalkyl, S-$C_{3-10}$ cycloalkyl, $NHCOR^{20}$ and $NR^{21}R^{22}$;
the $R^{21}$ and $R^{22}$ residues are identical or different and independently from each other selected from the group consisting of H, $C_{1-10}$ alkyl, $C_{6-12}$ aryl and $C_{1-12}$ alkyl-$NR^{23}R^{24}$;
the $R^{23}$ and $R^{24}$ residues are identical or different and independently from each other selected from the group consisting of H, $C_{1-10}$ alkyl and $C_{6-12}$ aryl;
the $R^{20}$ residues are identical or different and independently from each other selected from the group consisting of OH, $C_{1-6}$ alkyl, $C_{6-10}$ aryl and O-$C_{1-6}$ alkyl;
in an optical layer.

**2.** Use of a compound of formula (I) as defined in claim 1, wherein

M is selected from the group consisting of Co, Cr, Fe and A1;
R9 is $C_{1-4}$ alkyl;
R1a is selected from the group consisting of H, methoxy, O-phenyl and S-phenyl;
R2a is selected from the group consisting of H, isopropyl, methoxy, O-phenyl and S-phenyl;

with the proviso, that in the case that R2a is methoxy or H, then R1a is not H;

R12 is $NO_2$;
R11 is H or $NO_2$;
R10 is H or $NHCOCH_3$;
R13 is H.

**3.** Use of a compound of formula (I) as defined in claim 1 or 2, wherein

M is selected from the group consisting of Co, Fe and Al;
R9 is n-butyl;
R1a is selected from the group consisting of H, methoxy, O-phenyl and S-phenyl;
R2a is selected from the group consisting of H, isopropyl and methoxy;

with the proviso, that in the case that R2a is methoxy or H, then R1a is not H;

R12 is $NO_2$;
R10 is H or $NHCOCH_3$;
R11 and R13 are H.

**4.** Use of a compound of formula (I) as defined in one or more of claims 1 to 3, wherein
Cat+ is selected from the group of compounds of formulae (1), (2), (3), (4) and (5);

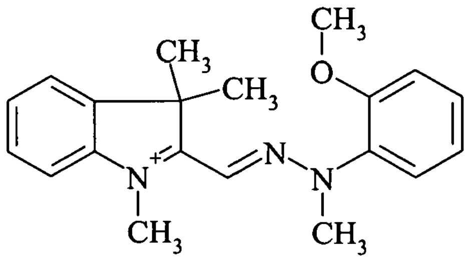

(1)

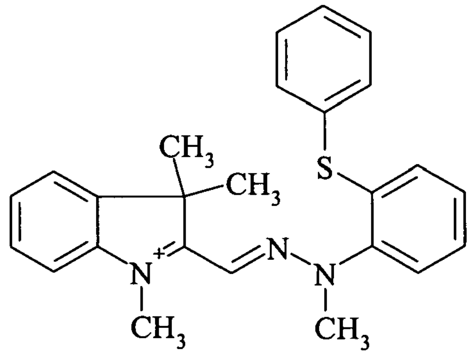

(2)

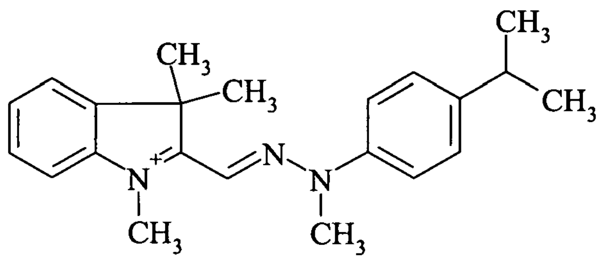

(3)

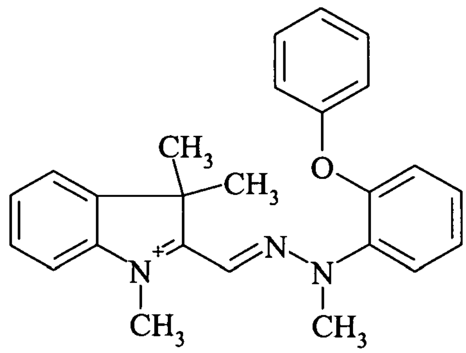

(4)

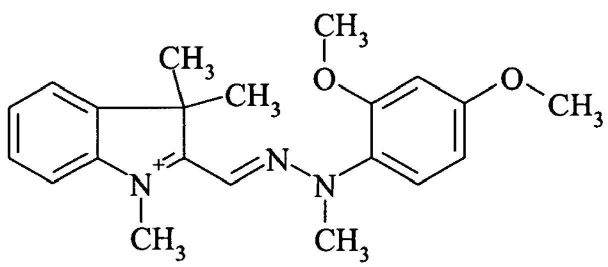

(5)

and

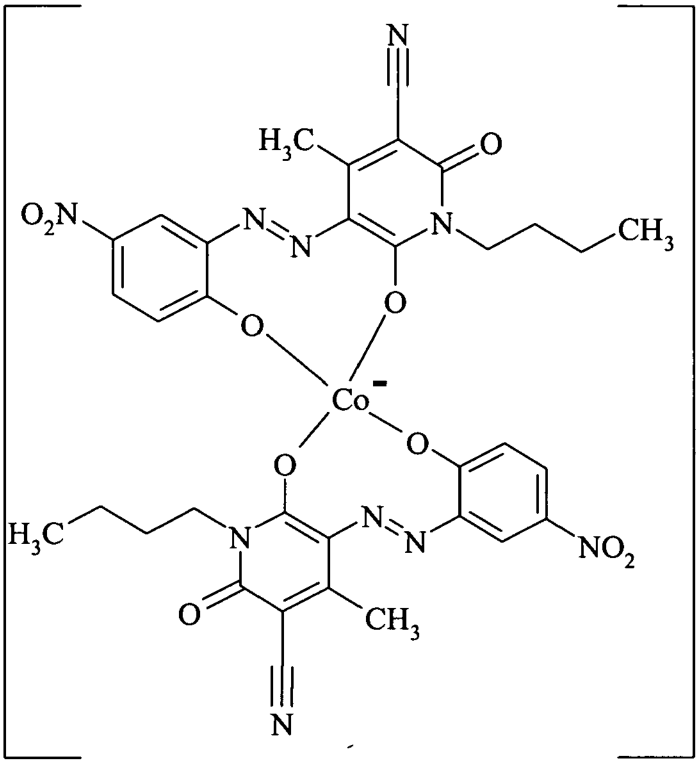

(10)

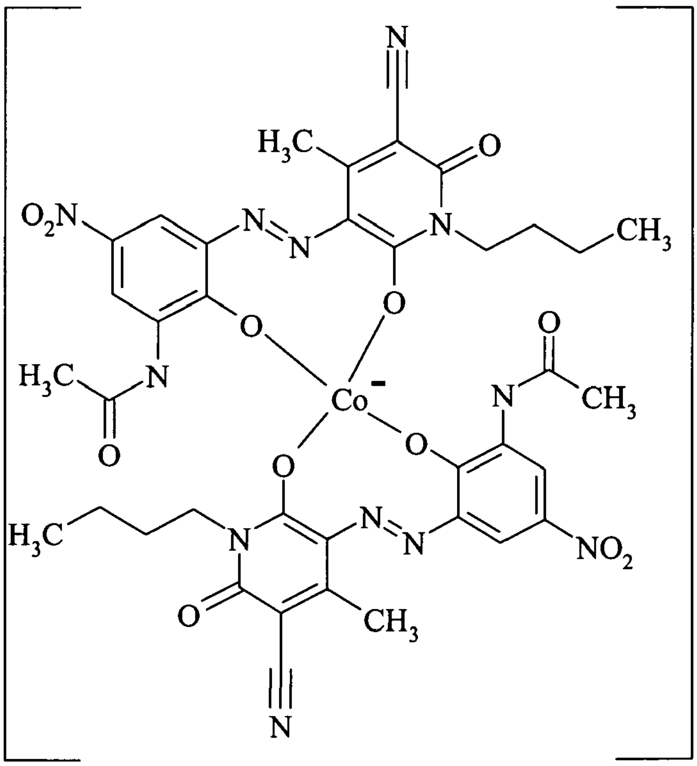

(11)

**An-** is a compound of formula (10) or a compound of formula (11).

**5.** Use of a compound of formula (I) as defined in one or more of claims 1 to 4, wherein the compound of formula (I) is selected from the group consisting of compounds of formulae (10_1), (10_2), (10_3), (10_4), (10_5), (11_1) and

(11_2); these formulae being as defined in table (A),

| Table (A) | | |
|---|---|---|
| **Compounds of formula (I): compound of formula** | **An-: compound of formula** | **Cat+: compound of formula** |
| **(10_1)** | (10) | (1) |
| **(10_2)** | (10) | (2) |
| **(10_3)** | (10) | (3) |
| **(10_4)** | (10) | (4) |
| **(10_5)** | (10) | (5) |
| **(11_1)** | (11) | (1) |
| **(11_2)** | (11) | (2) |

the An- and the Cat+ in the table (A) being as defined in claim 4.

**6.** A compound of formula (I) as defined in claim 1.

**7.** A compound of formula (I) as defined in claim 6, with
M, R9, R1a, R2a, R10, R11, R12 and R13 as defined in claim 2.

**8.** Use of a compound of formula (I) as defined in claim 6 or 7, with
M, R9, R1a, R2a, R10, R11, R12 and R13 as defined in claim 3.

**9.** A compound of formula (I) according to one or more of claims 6 to 8, wherein Cat+ is selected from the group of compounds of formulae (1), (2), (3), (4) and (5) as defined in claim 4; and
An- is a compound of formula (10) or a compound of formula (11) as defined in claim 4.

**10.** A compound of a formula (I) according to one or more of claims 6 or 9, wherein the compound is selected from the group consisting of compounds of formulae (10_1), (10_2), (10_3), (10_4), (10_5), (11_1) and (11_2) as defined in claim 5.

**11.** A process for the preparation of a compound of formula (I) as defined in one or more of claims claim 6 to 10, by metathesis reaction between the respective compound of formula (III_6)

| | |
|---|---|
| compound of formula (III) * compound of formula (6) | (III_6) |

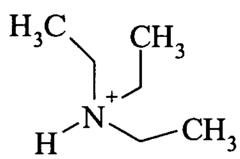

(6)

the compound of formula (III) being as defined in claim 1,
and the respective compound of formula (II_salts);

compound of formula (II) * anion(II) (II_salts)

the compound of formula (II) being as defined in claim 1, and the anion(II) being selected from the group consisting of halides, sulfate and methylsulfate.

**12.** A compound of formula (11_6),

compound of formula (11) * compound of formula (6) (11_6)

the compound of formula (6) being as defined in claim 11 and the compound of formula (11) being as defined in claim 4.

**13.** Use of a compound of formula (11_6) as defined in claim 12, for the preparation of a compound of formula (I) as defined in one or more of claims 6 to 10.

**14.** Process for the preparation of a compound of formula (11_6) as defined in claim 12, by a complexing reaction of a compound of formula (IV_11)

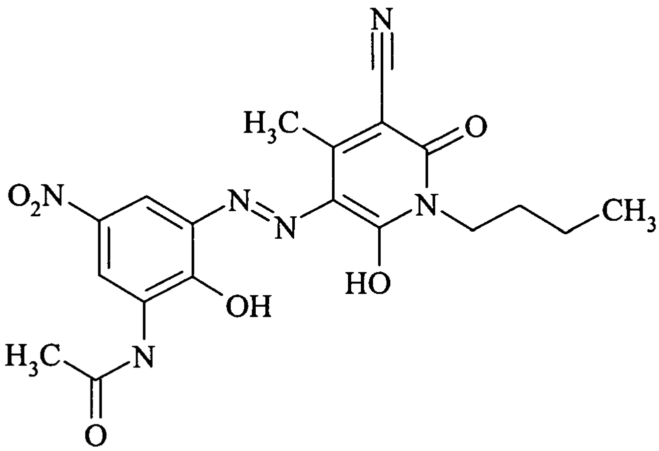

(IV_11)

with a divalent cobalt salt in the presence of triethylamine.

**15.** A compound of formula (IV_11) as defined in claim 14.

**16.** Use of a compound of formula (IV_11) as defined in claim 14 for the preparation of a compound of formula (11_6) as defined in claim 12.

**17.** Process for the preparation of a compound of formula (IV_11) as defined in claim 14, by an azo coupling reaction of a compound of formula (IVa_11) with a compound of formula (IVb_11).

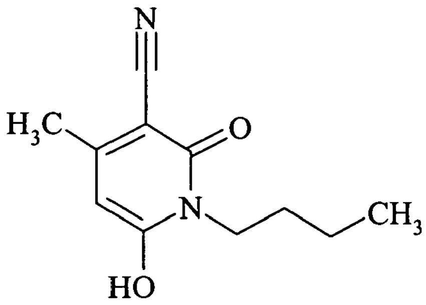

(IVa_11)

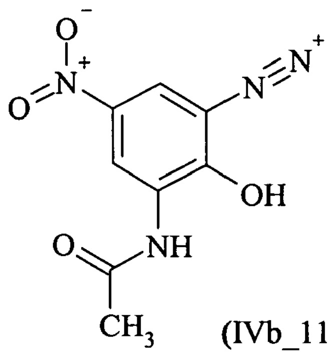

(IVb_11)

**18.** A compound of formula (II_salts) as defined in claim 11.

**19.** A compound of formula (II_salts) according to claim 18, wherein the compound of formula (II) is selected from the group of compounds of formulae (1), (2), (3), (4) and (5) as defined in claim 4, and the anion(II) is as defined in claim 11.

**20.** A compound of formula (II_salts) according to claim 18 or 19, wherein the compound is selected from the group of compounds of formulae (1_I), (2_I), (3_I), (4_I), (1_Cl), (3_Cl) and (5_Cl) as defined in table (A1),

| **table (A1)** | | |
|---|---|---|
| **compounds of formula (II_salts)** | **compounds of formula (II)** | **anion(II)** |
| **compound of formula** | **compound of formula** | |
| **(1_I)** | (1) | I- |
| **(2_I)** | (2) | I- |
| **(3_I)** | (3) | I- |
| **(4_I)** | (4) | I- |
| **(1_Cl)** | (I) | Cl- |
| **(3_Cl)** | (3) | Cl- |
| **(5_Cl)** | (5) | Cl- |

the compounds of formula (II) in the table (A1) being as defined in claim 4.

**21.** Use of compounds of formula (II_salts) as defined in one or more of claims 18 to 20 for the preparation of compounds of formula (I) as defined in one or more of claims 6 to 10.

**22.** Process for the preparation of a compound of formula (II_salts) as defined in one or more of claims 18 to 20, by an alkylation reaction of a compound of formula (Vd),

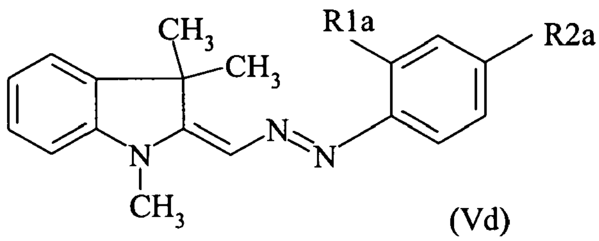

(Vd)

the R1a and R2a being as defined in one or more of claims 6 to 10, with methyl iodide or with dimethyl sulfate.

**23.** A compound of formula (Vd) as defined in claim 22.

**24.** A compound of formula (Vd) according to claim 23, wherein the compound is selected from the group of compounds of formula (Vd_1), (Vd_2), (Vd_3), (Vd_4) or (Vd_5).

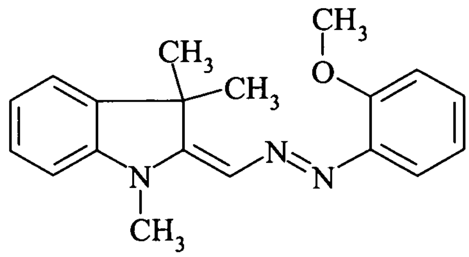

(Vd_1)

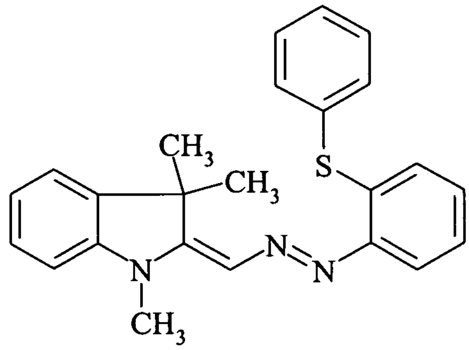

(Vd_2)

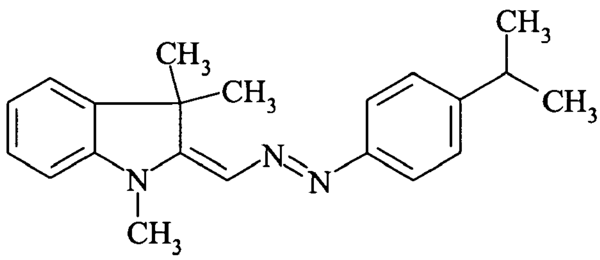

(Vd_3)

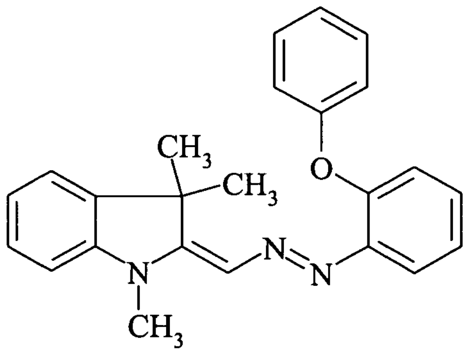

(Vd_4)

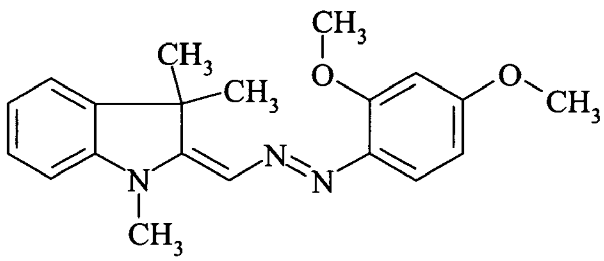

(Vd_5)

**25.** Use of a compound of formula (Vd) as defined in claim 23 or 24, for the preparation of a compound of formula (II_ salts) as defined in one or more of claims 18 to 20.

**26.** Process for the preparation of a compound of formula (Vd) as defined in claim 23 or 24, by an azo coupling reaction of the respective compound of formula (Va) with the respective compound of formula (Vb),

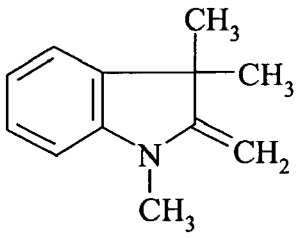

(Va)

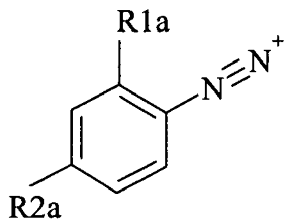

(Vb)

the R1a and R2a being as defined in one or more of claims 6 to 10.

**27.** An optical layer comprising a compound of formula (I) as defined in one or more of claim 6 to 10.

**28.** A method for producing an optical layer as defined in claim 27, comprising the following steps

(a) providing a substrate,
(b) dissolving at least one compound of formula (I) as defined in one or more of claims 6 to 10 in an organic solvent to form a solution,
(c) coating the solution (b) on the substrate (a),
(d) evaporating the solvent to form an optical layer.

**29.** An optical data recording medium comprising an optical layer as defined in claim 27.

European Patent Office

# EUROPEAN SEARCH REPORT

Application Number
EP 07 29 0675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 345 355 A (RODERICH RAUE) 3 October 1967 (1967-10-03) * column 1, line 18 - column 2, line 27; claims 4,5; example 1 * | 18-20, 22-26 | INV. G11B7/249 G11B7/246 |
| X | DE 35 45 605 A1 (BAYER AG [DE]) 25 June 1987 (1987-06-25) * page 4, lines 1-35; claim 1; examples * | 22-26 | |
| D,A | WO 2006/106110 A (CLARIANT INT LTD [CH]; STEFFANUT PASCAL [FR]; GRACIET JEAN-CHRISTOPHE) 12 October 2006 (2006-10-12) * claims 1,10; example 10; compound 28A * | 1,6,11, 18,21 | |
| A | JP 55 018427 A (HODOGAYA CHEMICAL CO LTD) 8 February 1980 (1980-02-08) * compound IV * | 18 | |
| A | WO 2007/048709 A (CLARIANT INT LTD [CH]; GRACIET JEAN-CHRISTOPHE [FR]; STEFFANUT PASCAL) 3 May 2007 (2007-05-03) * claims 1-15; examples * | 1-29 | TECHNICAL FIELDS SEARCHED (IPC) G11B |
| A | JP 2007 111887 A (MITSUBISHI KAGAKU MEDIA CO LTD; HAYASHIBARA BIOCHEM LAB) 10 May 2007 (2007-05-10) * paragraph [0136]; compound 47 * | 12,14-17 | |

The present search report has been drawn up for all claims

4

| Place of search | Date of completion of the search | Examiner |
|---|---|---|
| The Hague | 10 December 2007 | Stabel, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number
EP 07 29 0675

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

European Patent Office

# LACK OF UNITY OF INVENTION SHEET B

Application Number
EP 07 29 0675

The Search Division considers that the present European patent application does not comply with the requirements of unity of invention and relates to several inventions or groups of inventions, namely:

1. claims: 1-11, 13, 18-29

   Cat+ formula (II) alone and in combination with An- (An-*Cat+): use, process for making it and compound(s) as such.

   ---

2. claims: 12, 14-17

   compound of formula 11

   ---

**ANNEX TO THE EUROPEAN SEARCH REPORT ON EUROPEAN PATENT APPLICATION NO.** EP 07 29 0675

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2007

| Patent document cited in search report | Publication date | Patent family member(s) | Publication date |
|---|---|---|---|
| US 3345355 A | 03-10-1967 | BE 570686 A | |
| | | CA 647876 A | 04-09-1962 |
| | | CH 354530 A | 31-05-1961 |
| | | DE 1083000 B | 09-06-1960 |
| | | FR 1214896 A | 12-04-1960 |
| DE 3545605 A1 | 25-06-1987 | BR 8606327 A | 06-10-1987 |
| | | EP 0229980 A2 | 29-07-1987 |
| | | JP 2023229 C | 26-02-1996 |
| | | JP 7059671 B | 28-06-1995 |
| | | JP 62156165 A | 11-07-1987 |
| | | MX 169097 B | 22-06-1993 |
| | | US 4760132 A | 26-07-1988 |
| WO 2006106110 A | 12-10-2006 | AU 2006231592 A1 | 12-10-2006 |
| JP 55018427 A | 08-02-1980 | JP 1189630 C | 13-02-1984 |
| | | JP 58021934 B | 04-05-1983 |
| WO 2007048709 A | 03-05-2007 | WO 2007048710 A1 | 03-05-2007 |
| JP 2007111887 A | 10-05-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006106110 A


### Non-patent literature cited in the description


- C.I. Basic Yellow Dyes as counterion (C.I. stands for Color Index: colour index international. Society of Dyers and Colourists and American Association of Textile Chemists and Colorists, 2002